# EUROPEAN PATENT APPLICATION

(11) **EP 3 051 546 A1**
(43) Date of publication of application: **03.08.2016**
(21) Application number: 15153437.7
(22) Date of filing: 02.02.2015
(51) Int. Cl.: H01F 5/06, H01F 27/32, C09K 21/00

(54) **Fire resistant electric coil and power transformer using the same**

(71) Applicant: Starkstrom-gerätebau GmbH, 93055 Regensburg (DE)
(72) Inventor: Stuber, Lothar, 93055 Regensburg (DE)
(74) Representative: Hoffmann Eitle

(57) **Abstract**

The present invention aims at an improvement of fire inhibiting capability of electric coils. An electric coil (10) according to the present invention comprises a plurality of turns coiled around an axis to form a hollow coil body (14). Each turn is an arrangement of at least one winding layer (16) and at least one insulation layer (18). According to the present invention the hollow coil body (14) is at least partially covered by a fire inhibiting material selected from a group consisting of an intumescent material, a flame protection material, a foaming material, and a binder material. The present invention also provides a power transformer using the electric coil according to the present invention.

## Description

### FIELD OF INVENTION

The present invention relates to fire resistant electric coils and a power transformer using such fire resistant electric coils.

### BACKGROUND OF INVENTION

During manufacturing of electric coils a fire inhibiting capability may be achieved through use of fleeces with fire-load reducing adhesives, e.g., aluminum hydroxide. Such adhesives reduce the fire-load by, e.g., emission of water when a certain temperature is exceeded. The water will then reduce the temperature and oxygen concentration at the point of fire. However, once the chemically bound water is set free there is no more fire-load reducing effect.

Electric coils are used, e.g., in power transformers and in particular dry type transformers having a transformer core with at least one transformer leg, a low voltage coil being provided around the at least one transformer leg in a spaced manner and being connectable by low voltage terminals, and a high voltage coil being provided around the low voltage coil in a spaced manner and being connectable by high voltage terminals. Another application of electric coils may be, e.g., choke coils.

Dry type transformers have a reduced fire risk compared to oil transformers and therefore are used in sensible areas like subways, hospitals, mines, etc. In view of this the fire inhibiting capability of electric coils used in these transformers is of particular relevance for the product safety and quality and prove thereof is to be given on the basis of internationally standardized test procedures. Here, particular emphasis is put on the impact of the power transformer onto the overall fire scenario, e.g., temperature rise, flue gas density, presence of toxic gases, etc.

Further, during a fire combustible parts of the transformer - typically intermediate layers of low voltage electric coils, barrier cylinders, as well as the casting compound of the high voltage electric coils - will catch fire and reinforce the fire. Then, there are emitted burnable gases, flue gases, radicals and heat further contributing to the enforcement of the fire. Also, if cooling channels are used these will cause a stack effect leading to supply of fresh air and oxygen to the point of fire making the situation even more difficult.

### SUMMARY OF INVENTION

In view of the above, the object of the present invention is to improve fire inhibiting capability of electric coils.

Another object of the present invention is to provide a power transformer using electric coils according to the present invention.

According to the present invention this object is achieved by an electric coil, comprising a plurality of turns coiled around an axis to form a hollow coil body having an outer circumferential surface, an inner circumferential surface, a first side surface, and a second side surface. Each turn is an arrangement of at least one winding layer and at least one insulation layer. To improve fire inhibiting capability the hollow coil body is at least partially covered by a fire inhibiting material selected from a group consisting of an intumescent material, a flame protection material, a foaming material, and a binder material.

According to the present invention the object outlined above is also achieved by a dry cast power transformer, comprising a transformer core with at least one transformer leg, a low voltage coil being provided around the transformer leg in a spaced manner and being connectable by low voltage terminals, and a high voltage coil being provided around the low voltage coil in a spaced manner and being connectable by high voltage terminals. The low voltage coil and/or the high voltage coil are an electric coil according to the present invention as outlined above.

### BRIEF DESCRIPTION OF DRAWING

In the following different examples of the present invention will be explained with reference to the drawing in which:
- Fig. 1: shows an exploded view drawing, partially broken away, and a cross sectional view along the line I-I of a first example of an electric coil according to the present invention having the outer circumferential surface covered by fire inhibiting material;
- Fig. 2: shows an exploded view drawing, partially broken away, and a cross sectional view along the line I-I of a second example of an electric coil according to the present invention having the inner circumferential surface covered by fire inhibiting material;
- Fig. 3: shows an exploded view drawing, partially broken away, and a cross sectional view along the line I-I of a third example of an electric coil according to the present invention having the inner circumferential surface and the outer circumferential surface covered by fire inhibiting material;
- Fig. 4: shows an exploded view drawing, partially broken away, and a cross sectional view along the line I-I of a fourth example of an electric coil according to the present invention having the fire inhibiting material being provided within the hollow coil body;
- Fig. 5: shows an exploded view drawing, partially broken away, and a cross sectional view along the line I-I of a fifth example of an electric coil according to the present invention having a first side surface covered by fire inhibiting material;
- Fig. 6: shows an exploded view drawing, partially broken away, and a cross sectional view along the line I-I of a sixth example of an electric coil according to the present invention having a second side surface covered by fire inhibiting material;
- Fig. 7: shows an exploded view drawing, partially broken away, and a cross sectional view along the line I-I of a seventh example of an electric coil according to the present invention having the first side surface and the second side surface covered by fire inhibiting material;
- Fig. 8: shows an exploded view drawing, partially broken away, and a cross sectional view along the line I-I of an eighth example of an electric coil according to the present invention having cooling channels and the first side surface covered by fire inhibiting material, optionally also the inner side surfaces of the cooling channels;
- Fig. 9: shows an exploded view drawing, partially broken away, and a cross sectional view along the line I-I of a ninth example of an electric coil according to the present invention having cooling channels and the second side surface covered by fire inhibiting material, optionally also the inner side surfaces of the cooling channels;
- Fig. 10: shows an exploded view drawing, partially broken away, and a cross sectional view along the line I-I of a tenth example of an electric coil according to the present invention having cooling channels and the first side surface and the second side surface partially covered by fire inhibiting material, optionally also the inner side surfaces of the cooling channels;
- Fig. 11: shows an exploded view drawing, partially broken away, and a cross sectional view along the line I-I of an eleventh example of an electric coil according to the present invention having cooling channels and the fire inhibiting material being provided within the hollow coil body;
- Fig. 12: shows an exploded view drawing, partially broken away, of a double coil arrangement according to a twelfth example of the present invention;
- Fig. 13: shows an exploded view drawing, partially broken away, of a double coil arrangement comprising a barrier cylinder according to a thirteenth example of the present invention;
- Fig. 14: shows a test chamber used for carrying out a fire behavior test with respect to electric coils;
- Fig. 15: shows an outcome of a fire behavior test carried out with respect to a high voltage electric coil according to the present invention; and
- Fig. 16: shows a cross sectional view of a power transformer according to the present invention.

### DETAILED DESCRIPTION

In the following there will be given an explanation of different examples of the present invention. In should be noted that these examples are not to be considered as restricting the scope of the present invention and that further variations and modifications form part of the present invention as long as they are covered by the scope of the appended claims.

Generally, according to the present invention there is provided an electric coil, comprising a plurality of turns coiled around an axis to form a hollow coil body having an outer circumferential surface, an inner circumferential surface, a first side surface, and a second side surface. Further, each turn is an arrangement of at least one winding layer and at least one insulation layer. Still further according to the present invention the hollow coil body is at least partially covered by a fire inhibiting material selected from a group consisting of an intumescent material, a flame protection material, a foaming material, and a binder material.

It should be understood that according to the present invention the hollow coil body is not restricted to any particular form and may be, e.g., a hollow cylinder having outer and inner cylindrical surfaces and having circular, ellipsoidal or rectangular ring surfaces as first and second side surface. Also the type of winding may be any suitable type of winding, e.g., wire winding and/or foil winding.

Preferably, according to the present invention the fire inhibiting material is deposited on a fire protection mat and the fire protection mat is attached at least to a part of an outer surface of the coil hollow body. Here, the fire protection mat may be a fabric carrier or fleece and the fire inhibiting material may be fixed to the fabric carrier or fleece by the binding agent.

Further, the fire protection mat may be made of plastic, e.g., PET, paper, foil or glass and has a weight of 50 to 300 g/m². The fire protection mat may be in the form of a roll or plate, has a width of 10 mm to 2000 mm, a thickness of 0.5 mm to 5 mm, a length of 200 mm to 500000 mm in the form of the roll and a length of 500 mm to 3000 mm in the form of a plate, and a weight of 150 g/m² to 1000 g/m². Optimally, the fire protection mat may be imbued and be provided in any color.

Further, regarding the attachment of the fire protection mat to any partial surface of the coil hollow body, any appropriate technique is applicable. E.g., the fire protection mat may either form part of the winding process of the coil hollow body or may be attached to the coil hollow body after forming thereof in a subsequent processing step.

I.e., the fire protection mat may be winded into a coil hollow body, e.g., a high voltage coil or a low voltage coil, during the formation process of the coil hollow body, and subsequently be dry casted together with the winding and the insulation layers of the coil hollow body.

Another form of attachment is to form the coil hollow body and to then attach the fire protection mat by means of a shrinkage foil or shrinkage binding band. The fire protection mat may also be glued to the electric coil after casting thereof or after the binding of the electric coil and subsequent hardening. Alternatively, the fire protection mat may also be welded.

Further, the fire protection mat itself is non-adhesive, free of halogen, and non-toxic. Also, the fire protection mat, e.g., in the case of being foamed, is thermally stable.

Overall, the fire protection mat according to the present invention is dimensionally stable and does not show any over-stretching during handling thereof. It is thermally stable from -50°C to 200°C and has a non-aging characteristic in the processed state of at least 20 years. Also, it has no influence on the electrical properties of the electrical coil, e.g. tracking resistance or resistance against disruptive breakdown. Further, it may be impregnated easily, e.g., with resin and can be easily glued, e.g., with prepreg.

Further, according to the present invention the intumescent material may be ammonium phosphate, organic triphosphate or DOPO, i.e. 9, 10-dihydro-9-oxa-10-phosphaphenanthren-10-oxide. The flame protection - or equivalently retardant - material may be aluminum hydroxide, magnesium hydroxide, inorganic phosphorous (e.g. red phosphorous or ammonium phosphorus), graphite or an organic phosphorous compound (e.g. organic or inorganic phosphoric ester). The foaming material may be an inorganic melamine compound (e.g., melamine phosphate, melamine silicate), inorganic guanidine compound (e.g. guanidine phosphate), or encapsulated melamine.

Further, according to the present invention the binder is a copolymer based on acrylate, styrene, or vinyl acetate. Also, the binder may be polyurethane, vinyl resin, or an epoxy resin.

Further preferably, according to the present invention the weight of the fire inhibiting material is from 100 g/m² to 700 g/m².

Generally, the present invention improves the fire protection by use of a fire inhibiting function. I.e., fire inhibiting substances are provided as foaming substances and combined into a new fire protection mat while using a carrier material. The fire protection mat is then integrated either into the coil hollow body or used to cover partial surfaces thereof.

The foaming substances in the fire protection mat will foam in the case of a fire and therefore generate at the coil hollow body surfaces a non-burnable, thermally insulating and quasi gas proof protection layer. Hereby, the temperatures are decreased and the oxygen supply is at least reduced. Assuming that the coil hollow body has cooling channels then related openings are covered by the foaming material so as to eliminate the convection of air thereby reducing the fire risk. Overall, the invention allows counteracting the reason for the fire, i.e. the availability of burnable material and the supply of oxygen.

Overall, the functionality of the fire protection mat according to the present invention may be summarized according to the category chemical functionality, physical functionality, and detailed processes as follows:
- Chemical functionality:
   - Emission of radical collectors, which suppress the radical chain reaction (equals fire).
   - Generation of a protection layer, i.e. intumescence (from "carbonated" material, which protection layer inhibits supply of further oxygen and heat as well as the exit of a combustible gas).
- Physical functionality:
   - Cooling through use of energy generated in an endothermic decomposition, e.g., separation of water.
   - Dilution of combustible gases by inert, segregated gases.
- Detailed functionality under heat influence:
   - Softening of binder, i.e., the casting compound.
   - Release of an organic acid.
   - Carbonization, e.g., of polyhydrids or polyhydroxy alcohols or polyalcohols.
   - Release of radical binding material.
   - Generation of gas by the sponging agent, e.g., melamine.
   - Foaming.
   - Hardening by linking reactions and generation of class type coatings and/or of a carbon layer.

Further to the above, there are certain control means of the fire inhibiting characteristic of the fire protection mat by variance in composition and variation in the use of the fire protection mat/thickness, in particular in view of the following parameters:
- Intumescence height.
- Start temperature of intumescence.
- Stability of the intumescence/insulating layer
- stalling pressure.
- Density of the intumescence layer.
- Mechanical stability of the intumescence layer.
- Thermal conductivity of the intumescence layer.

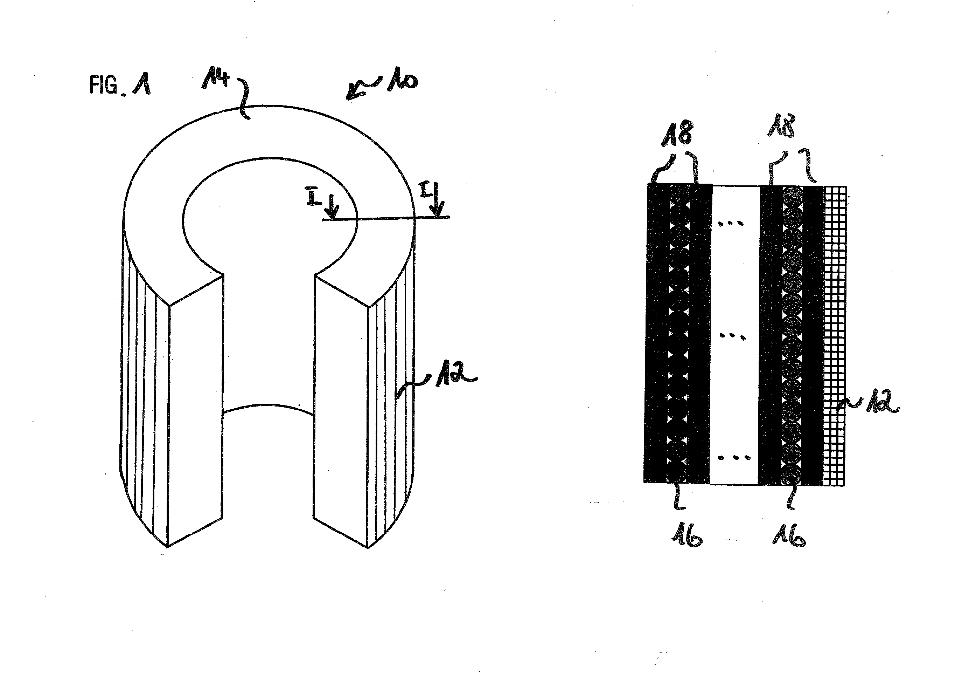

In the following different examples of realizations of the fire resistant electric coil according to the present invention will be described with respect to Fig. 1 to 15.

Fig. 1 shows an exploded view drawing, partially broken away, and a cross sectional view along the line I-I of a first example of an electric coil according to the present invention.

As shown in Fig. 1, according to the first example of the electric coil 10 according to the present invention the fire protection mat 12 is provided at the outer circumferential surface of the coil hollow body 14 prior to a dry-casting of the electric coil.

Further, the fire protection mat 12 may be attached to the outer circumferential surface by glue, by shrinkage foil, by welding, or by mechanical fixing means. It may be provided in the form of a single layer or of multiple layers.

As shown in the right part of Fig. 1, one option for the present invention is to provide the winding layers as wire winding layers 16 separated by insulating layers 18. Alternatively, the winding layers may also be provided as foil wires or band layers, e.g., in the form of aluminum bands, should the electric coil be a low voltage electric coil of a transformer.

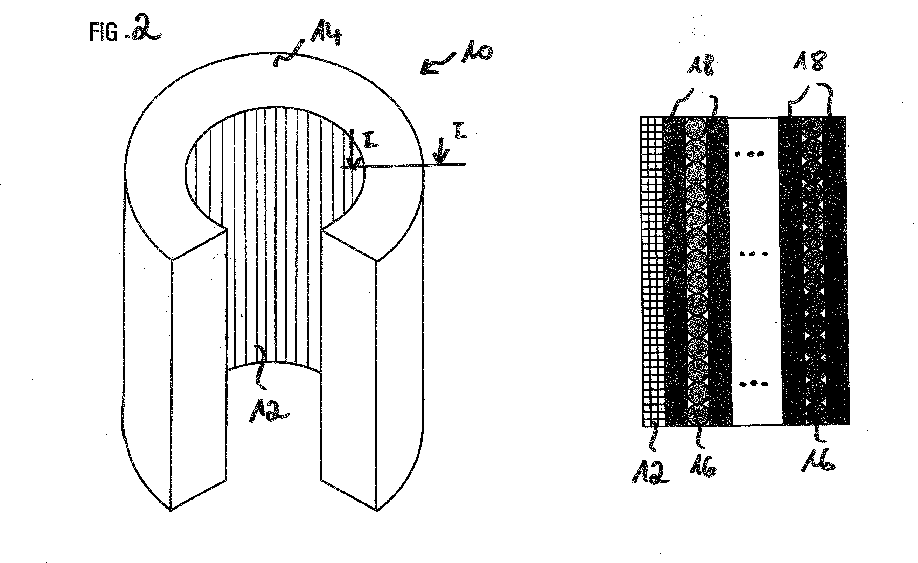

Fig. 2 shows an exploded view drawing, partially broken away, and a cross sectional view along line I-I of a second example of the electric coil 10 according to the present invention.

As shown in Fig. 2, according to the second example of the electric coil 10 according to the present invention the fire protection mat 12 is provided at the inner circumferential surface of the coil hollow body 14.

Further, the fire protection mat 12 may be attached to the inner circumferential surface by glue, by welding, or by mechanical fixing means.

As again shown in the right part of Fig. 2, the coil hollow body 14 may be provided in a sequence of winding layer 16 separated by insulating layers 18.

Further, the fire protection mat 12 may be attached to the innermost insulating layer, e.g., prior to dry-casting of the coil hollow body or subsequent to the dry-casting of a coil hollow body 14. In the latter case, when the fire protection mat 12 is attached subsequent to the formation of the coil hollow body, this leaves the option to preprocess already readily manufactured electric coils prior to shipment thereof.

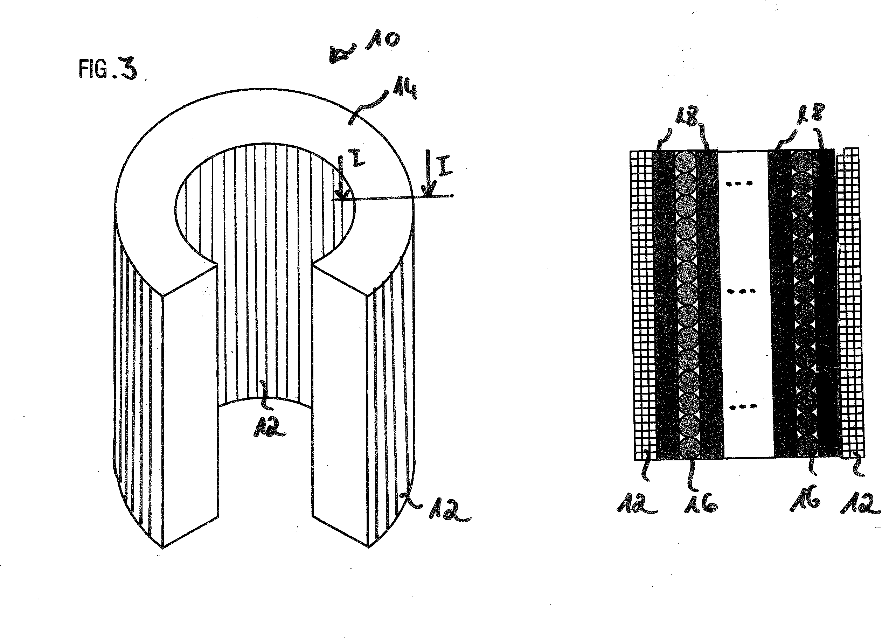

Fig. 3 shows an exploded view drawing, partially broken away, and a cross sectional view along line I-I of a third example of the electric coil 10 according to the present invention.

As shown in Fig. 3, according to the third example of the electric coil 10 according to the present invention the fire protection mat 12 is provided at the inner circumferential surface and the outer circumferential surface of the coil hollow body 14.

Further, the fire protection mat 12 may be attached to the inner circumferential surface and the outer circumferential surface as explained above with respect to Fig. 1 and Fig. 2, respectively.

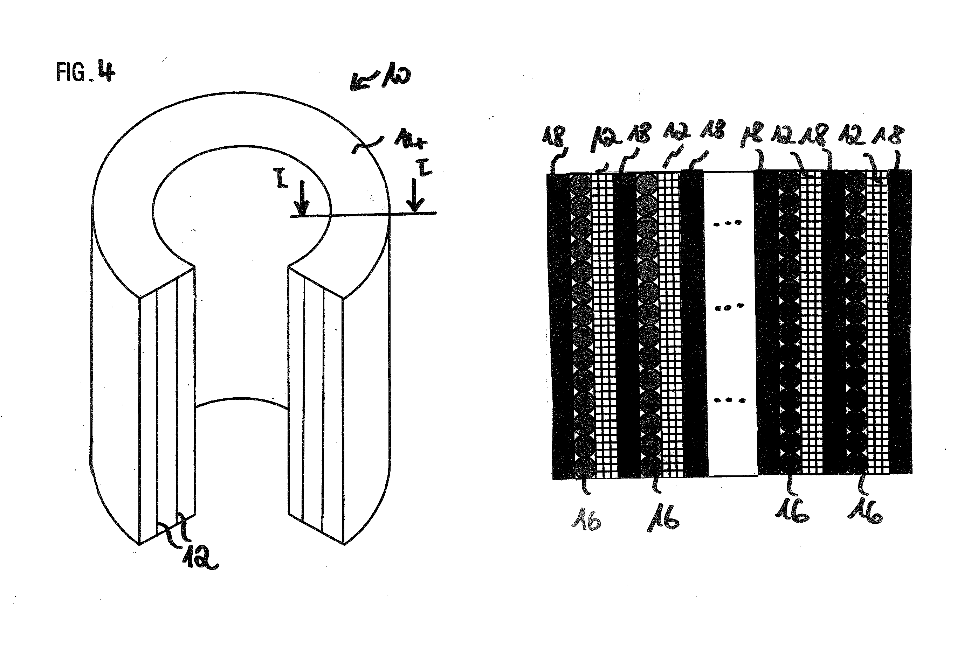

Fig. 4 shows an exploded view drawing, partially broken away, and a cross sectional view along the line I-I of a fourth example of the electric coil 10 according to the present invention.

As shown in Fig. 4, according to the fourth example of the electric coil 10 according to the present invention the fire protection mat 12 is provided within the coil hollow body 14 prior to a dry-casting of the electric coil 10.

Further, the fire protection mat 12 is provided within the coil hollow body 14 by integrally winding the fire protection mat 12 together with the winding layer 16 and the insulating layer 18 during formation of the coil hollow body 14. This may be achieved by providing at least one turn of the electric coil as an arrangement of at least one winding layer 16, at least one insulation layer 18, and at least one fire protection mat 12.

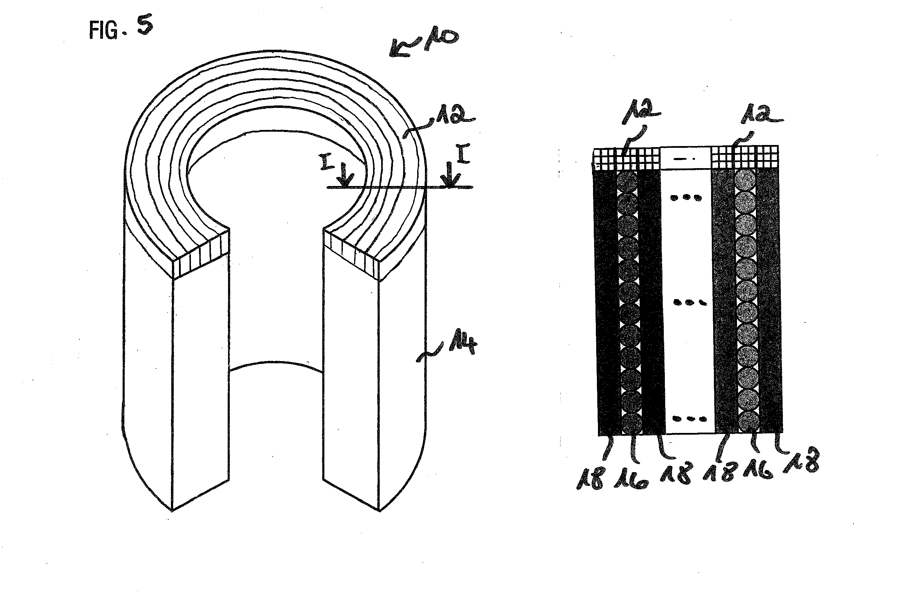

Fig. 5 shows an exploded view drawing, partially broken away, and a cross sectional view along line I-I of a fifth example of the electric coil 10 according to the present invention.

As shown in Fig. 5, according to the fifth example of the electric coil according to the present invention the fire protection mat 12 is provided to cover a first side surface. The fire protection mat 12 may be provided on the first side surface in a thickness of 1 mm to 50 mm.

Here, it should be noted that the provision of the fire protection mat according to the present invention may be established in various ways. A first option is to wind the fire protection mat itself into a form corresponding to the cross section of the coli hollow body 14. A second option is to cover the side surface with one or more layers of the fire protection mat and to then cut the generated protection layer into the form corresponding to the cross section of the coli hollow body 14. Yet another option would be a combination of the first option and the second option.

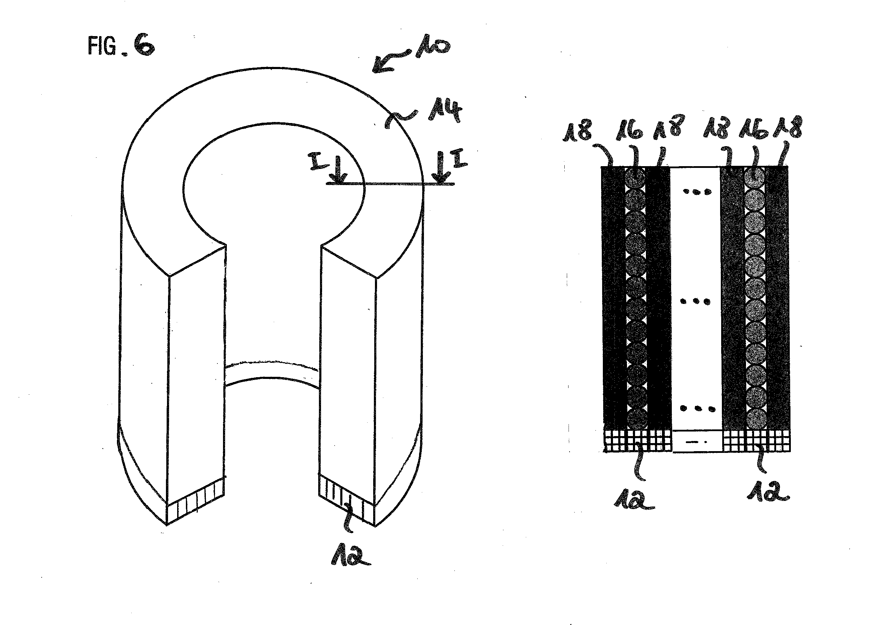

Fig. 6 shows an exploded view drawing, partially broken away, and a cross sectional view along line I-I of a sixth example of the electric coil 10 according to the present invention.

As shown in Fig. 6, according to the sixth example of the electric coil 10 according to the present invention the fire protection mat 12 is provided to cover the second side surface of the coil hollow body 14. The fire protection mat 12 may be provided on the second side surface in a thickness of 1 mm to 50 mm.

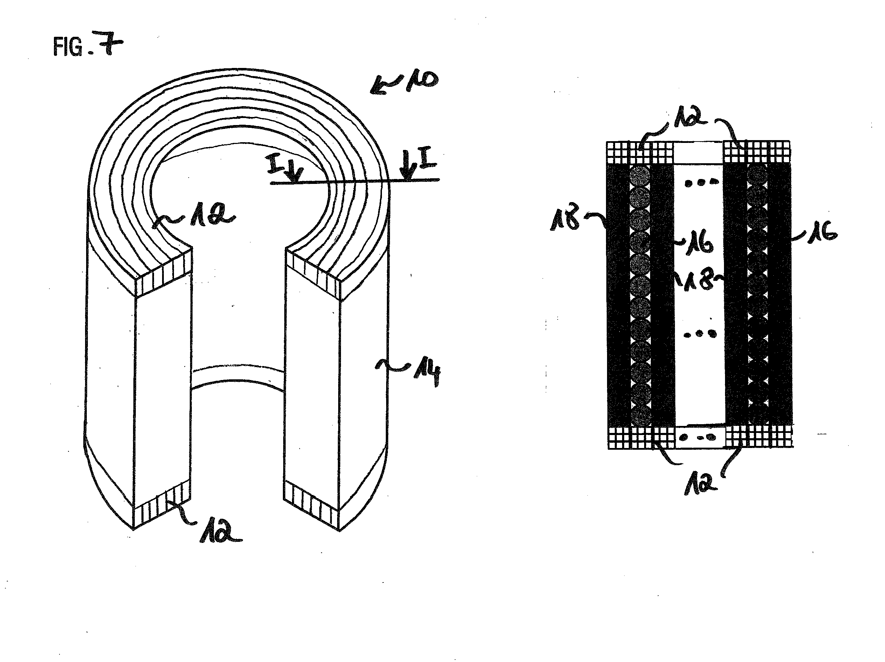

Fig. 7 shows an exploded view drawing, partially broken away, and a cross sectional view along line I-I of a seventh example of the electric coil 10 according to the present invention.

As shown in Fig. 7, according to the seventh example of the electric coil 10 according to the present invention the fire protection mat 12 is provided to cover the first side surface and the second side surface.

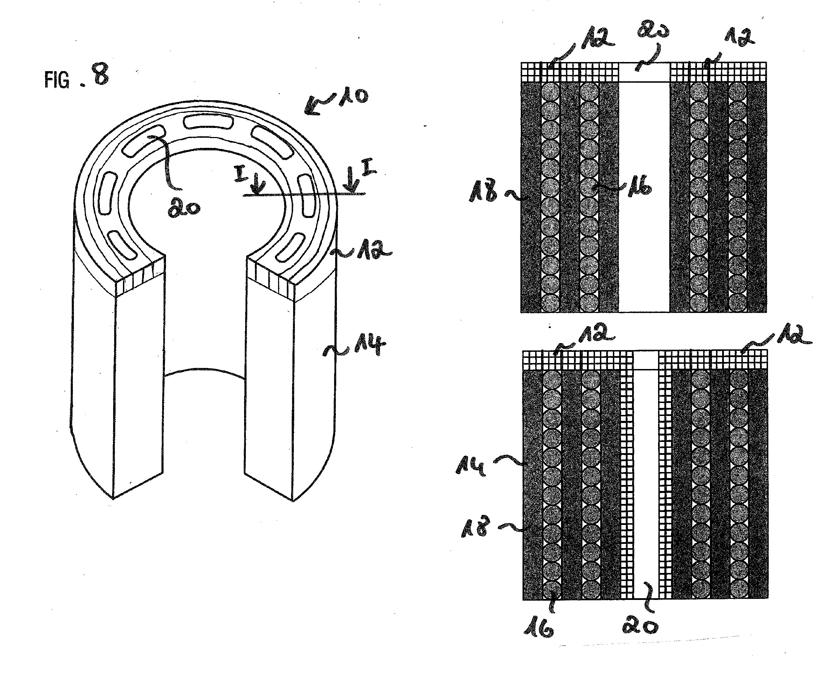

Fig. 8 shows an exploded view drawing, partially broken away, and a cross sectional view along line I-I of an eighth example of the electric coil 10 according to the present invention having cooling channels 20.

As shown in Fig. 8, according to the eighth example of the electric coil according to the present invention the fire protection mat 12 is provided to cover the first side surface while leaving the cooling channel openings 20 uncovered. Optionally, also the inner side surfaces of the cooling channels 20 may be covered by the fire protection mat 12.

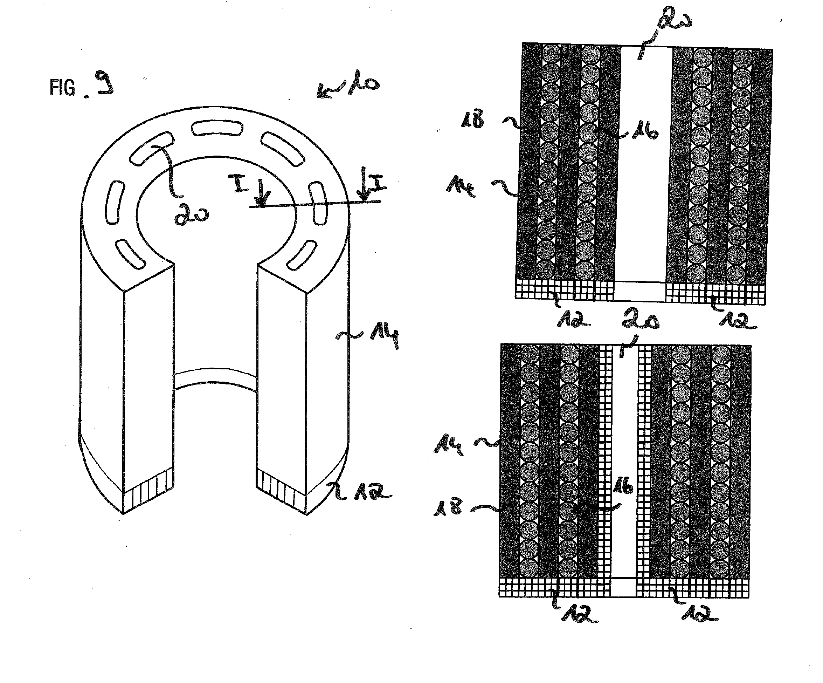

Fig. 9 shows an exploded view drawing, partially broken away, and a cross sectional view along line I-I of a ninth example of the electric coil 10 according to the present invention having cooling channels 20.

As shown in Fig. 9, according to the ninth example of the electric coil 10 according to the present invention the fire protection mat 12 is provided to cover the second side surface while leaving the openings of the cooling channels 20 uncovered. Optionally, also the inner side surfaces of the cooling channels 20 may be covered by the fire protection mat 12.

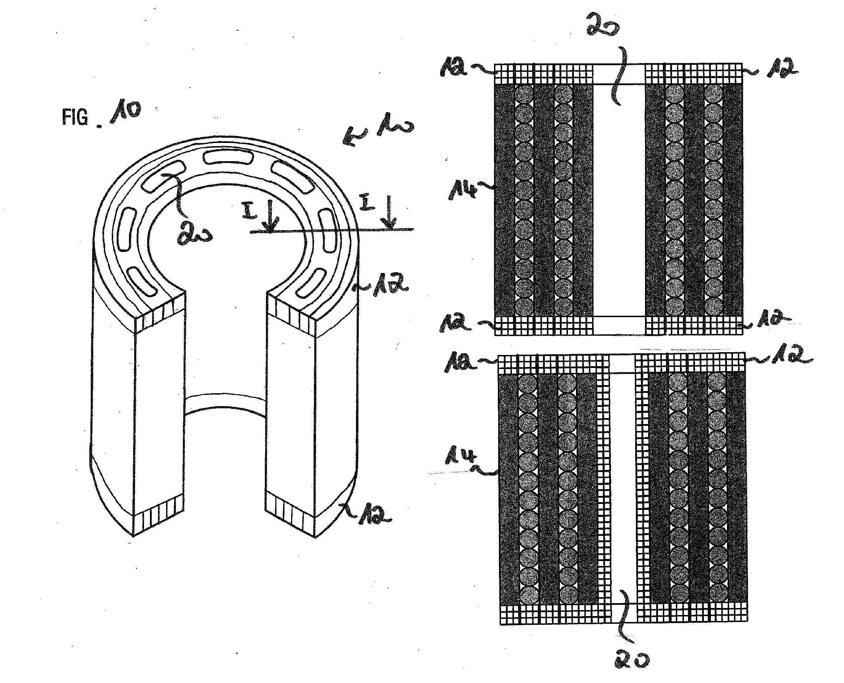

Fig. 10 shows an exploded view drawing, partially broken away, and a cross sectional view along line I-I of a tenth example of the electric coil 10 according to the present invention having cooling channels 20.

As shown in Fig. 10, according to the tenth example of the electric coil 10 according to the present invention the fire protection mat 12 is provided to cover the first side surface and the second side surface while leaving the openings of the cooling channels 20 uncovered. Optionally, also the inner side surfaces of the cooling channels 20 may be covered by the fire protection mat 12.

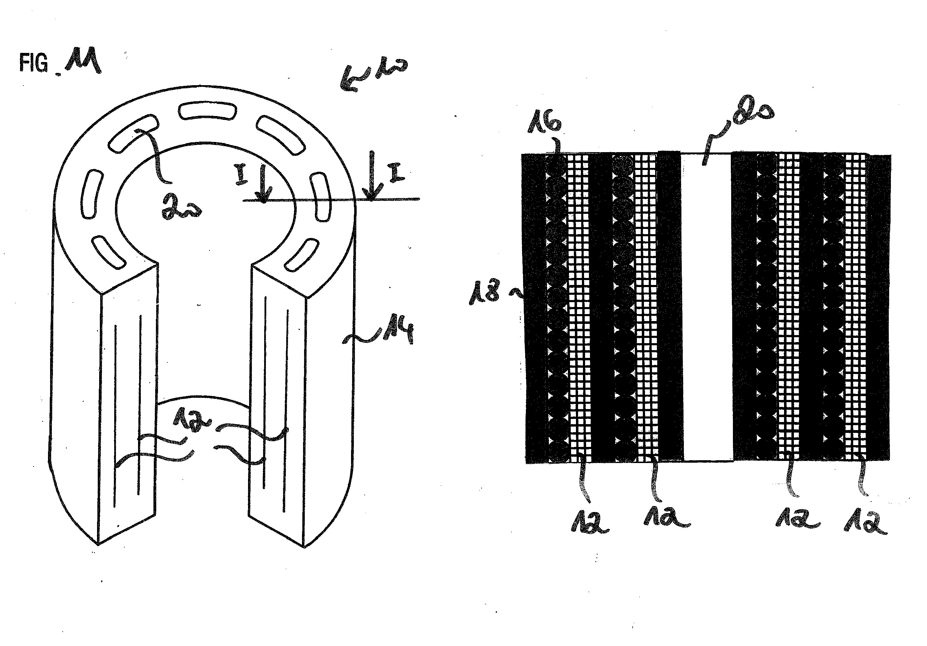

Fig. 11 shows an exploded view drawing, partially broken away, and a cross sectional view along the line I-I of an eleventh example of the electric coil 10 according to the present invention having cooling channels 20.

As shown in Fig. 11, according to the eleventh example of the electric coil 10 according to the present invention the fire protection mat 12 is provided within the hollow coil body 14.

The fire protection mat 12 is provided within the coil hollow body 14 by integrally winding the fire protection mat 12 together with the winding layer 16 and the insulating layer 18 during formation of the coil hollow body 14.

According to the eleventh example of the electric coil 10 according to the present invention the fire protection mat 12 may be provided so as to cover the inward directed sides of the cooling channels, as an option. Also, any other suitable arrangement using a combination with the previously outlined first to tenth examples is well covered by the scope of the present invention.

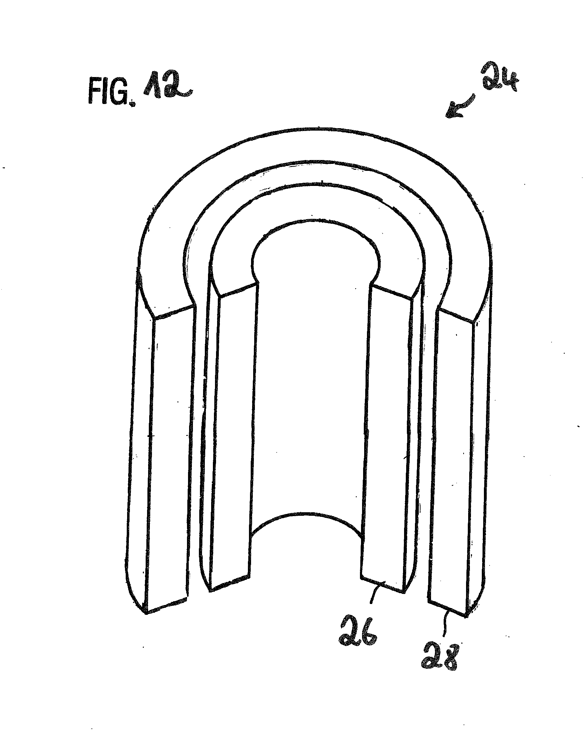

Fig. 12 shows an exploded view drawing, partially broken away, of a double coil arrangement 24 according to a twelfth example of the present invention.

The double coil arrangement comprises an inner electrical coil, e.g., a low voltage electric coil, and an outer electric coil 28, e.g., a high voltage electric coil. The double coil arrangement 24 is typically used in power transformers for one phase of a multiple phase alternating current.

The space provided between the inner electric coil 26 and the outer electric coil 28 allows for supply of cooling medium during operation, e.g., air. Assuming that at least part of the outer circumferential surface of the inner electric coil 26 or part of the inner circumferential surface of the outer electric coil 28 is covered by the fire protection mat according to the present invention than in case of fire the related fire inhibiting substances will foam and block the convection channel formed between the inner electric coil 26 and the outer electric coil 28.

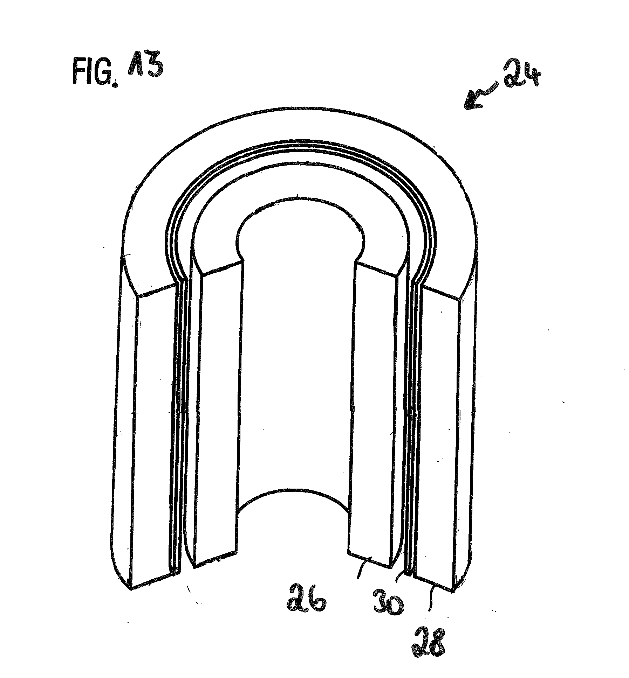

Fig. 13 shows an exploded view drawing, partially broken away, of a double coil arrangement 24 comprising a barrier cylinder 30 according to a thirteenth example of the present invention.

As shown in Fig. 13, the barrier layer 30 is provided between the inner electric coil 26 and the outer electric coil 28 to improve the fire resistance of the double coil arrangement 24. The barrier cylinder 30 is at least partially covered by the fire inhibiting material selected from a group consisting of an intumescent material, a flame protection material, a foaming material, and a binder material.

The intumescent material of the barrier layer 30 is ammonium phosphate, organic triphosphate or 9, 10-dihydro-9-oxa-10-phosphaphenanthren-10-oxide (DOPO).

The flame protection material of the binder layer 30 is aluminum hydroxide, magnesium hydroxide, inorganic phosphorous, graphite or organic phosphorous compounds.

The foaming material of the barrier layer 30 is an inorganic melamine compound, inorganic guanidine compound, or encapsulated melamine.

Further, the barrier layer 30 is a copolymer based on acrylate, styrene, or vinyl, an acetate, a polyurethane, a vinyl resin, or an epoxy resin.

As shown in Fig. 13, between the inner electric coil 26 and the barrier layer there is provided a spacing. Also, between the barrier layer and the outer electric coil 28 there is again provided a spacing. The flow of air in the channels formed by the spacing is again blocked by foaming of the fire inhibiting material provided on the fire inhibiting mat on either one of the inner electric coil 26, the barrier cylinder 30, or the outer electric coil 28.

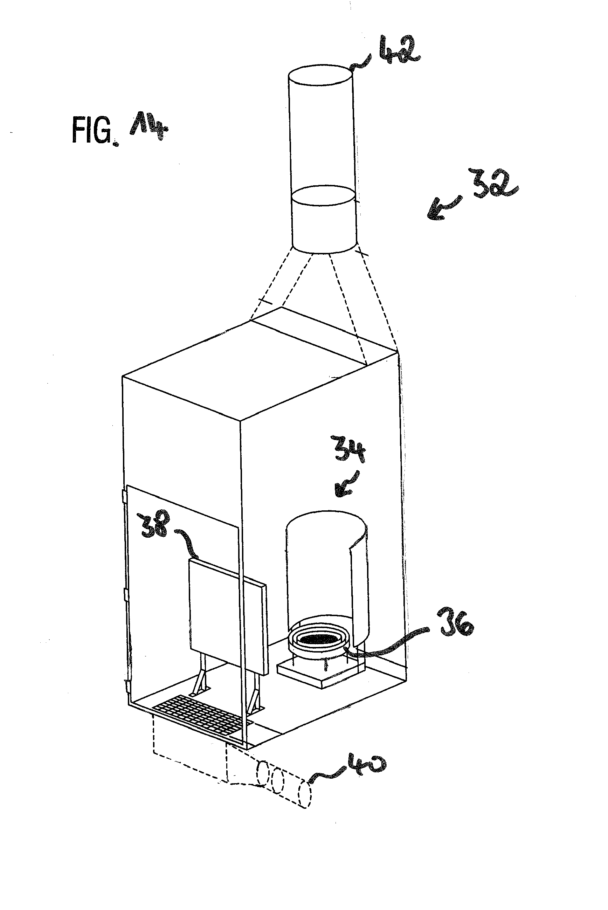

Fig. 14 shows a test chamber 32 used for carrying out a fire behavior test with respect to electric coils.

Generally, the test chamber 32 serves to implement a testing procedure where the item under test is placed in the test chamber 32 at a side 34. As the placement site for the test item there is provided a container 36 that accommodates combustible material to set the test item under fire.

As shown in Fig. 14, the in front of the test item there is provided flat radiant electric panel 38 to exert additional thermal load on the test item.

As shown in Fig. 14, the test chamber 32 may be supplied with fresh air through a supply 40 and the atmosphere within the test chamber 32 may be discharged through an outlet 42.

Further, the volume of test chamber 32 has a predefined specification with respect to the test item such that clearances from any part of the test item to the walls, ceiling, and flat radiant electric panel 38 have a predetermined clearance.

Overall, the test chamber 32 allows to control the temperature and humidity around a test item positioned at the side 34. The test procedure implemented within the test chamber is according to predefined specifications, e.g., 60076-11, IEC:2004, as an example. There are defined a variety of test scenarios for dry-part power transformers such as climatic tests, fire behavior tests, etc.

In particular, the fire behavior test serves to optimize the behavior of the test item so as to minimize the emission of toxic substances and opaque smoke in the event of fire. Typically, a test is carried out on one complete phase of a transformer comprising low voltage coil and high voltage coil, a coil leg and insulation components in combination with a fire protection mat according to the present invention. Optionally, the coil leg may be omitted wherein the test, should only the fire inhibiting capability of the low voltage electric coil and the high voltage electric coil be the issue of the test.

During the test there are specific types of ignition sources for setting the test object under fire such as ethyl alcohol burning in the container 36 which may be subdivided by concentric rings. A second source of heat is the vertically placed flat radiant electrical panel 38 made of heating resistors providing an adjustable power source to maintain the panel at a predetermined temperature, e.g., at 750°C.

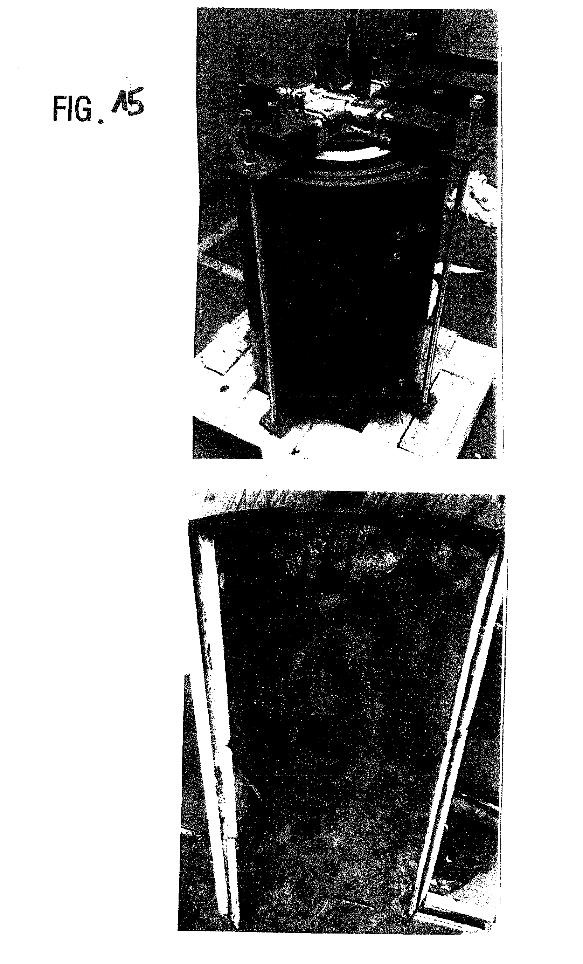

Fig. 15 shows the outcome of a fire behavior test carried out with respect to a double coil arrangement 24 according to the present invention.

In more detail, Fig. 15 shows the double coil arrangement prior to the test in the test chamber 32 and the outer high voltage electric coil subsequent to the test.

As shown in Fig. 15, prior to the test the inner low voltage electric coil and the outer high voltage electric coil with cooling channels are fixed by a metallic framework. Then, the arrangement is positioned in the test chamber and subjected to fire heat irradiation. Then, the lower part of Fig. 15 shows the result of the fire inhibiting test.

As can be seen from the lower part of Fig. 15, through application of the inventive concepts as outlined above the structure of the high voltage electric coil remains unaffected by fire. Only the outer surfaces are covered by the protective layer generated by chemical transitions of the materials provided in the fire protecting mat.

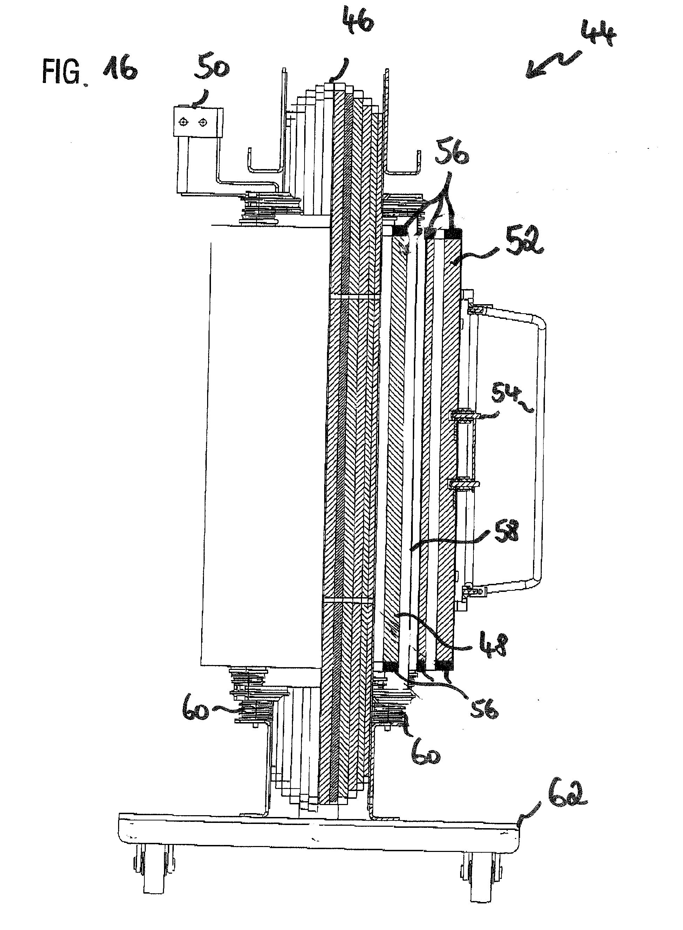

In the following, the application of the inventive fire protection concepts to a dry type power transformer will be illustrated with respect to Fig. 16.

Generally, the power transformer should at least comprise one core, at least one leg, at least one low voltage electric coil, optionally at least one barrier cylinder, and at least one high voltage electric coil. The low voltage electric coil, the barrier cylinder, and the high voltage electric coil are arranged concentrically around the leg such there is provided a space between the leg and the low voltage electric coil, between low voltage electric coil and the barrier cylinder, as well as between barrier cylinder and the high voltage electric coil. The circular spaces serve as cooling channels and the air rising therein cools the adjacent components. Generally, the low voltage electric coil and the high voltage electric coil can be provided with or without integrated cooling channels.

Further, referring to the construction elements the core is set up of foil-plates which may be lacquered. The low voltage electric coil may be set up from a foil winding using different materials like copper or aluminum and an intermediate insulating layer. The terminal connections may be set up from copper or aluminum. The low voltage electric coil is further provided with the fire protection mechanism as outlined above and may be dry cast using EP or PUR material or may be of the wound type. The barrier cylinder may have a thickness from 0.5 mm to 3 mm.

Still further, also the high voltage electric coil may be provided as wire winding or tape winding, in combination with a reinforcement material. Further, the high voltage electric coil is casted with EP or PUR material.

Fig. 16 shows a cross sectional view of the power transformer 44 according to the present invention which uses at least one fire resistant electric oil according the present invention as outlined above.

As shown in Fig. 16, the power transformer 44 comprises a transformer core 46 with at least one transformer leg, a low voltage electric coil 48 being provided around the transformer leg in a spaced manner and being connectable by low voltage terminals 50, a high voltage electric coil 52 being provided around the low voltage coil 48 in a spaced manner and being connectable by high voltage terminals 54. Here, the low voltage electric coil 48 and/or the high voltage electric coil 52 are an electric coil according to one of the aspects as outlined above, e.g., having fire protection mats 56 provided at both side surfaces of the low voltage electric coil 48 and the high voltage electric coil 52.

Optionally, the power transformer 44 comprises a barrier cylinder 58 provided between a pair of the low voltage electric coil 48 and the high voltage electric coil 52, the barrier cylinder 58 being at least partially covered by a fire inhibiting material selected from a group consisting of an intumescent material, a flame protection material, and a foaming material.

As shown in Figure 16, further components of the power transformer 44 according to the present invention may be support blocks 60 and a chassis 62.

Further preferably, in the power transformer 44 the intumescent material of the barrier layer 58 is ammonium phosphate, organic triphosphate or DOPO, i.e. 9,10-dihydro-9-oxa-10-phosphaphenanthren-10-oxide.

Further preferably, in the power transformer 44 the flame protection and retardant material of the barrier layer 58 is aluminum hydroxide, magnesium hydroxide, inorganic phosphorous (e.g., red phosphorous or ammonium phosphorous), graphite or organic phosphorous compounds (e.g., organic or inorganic phosphoric ester).

Further preferably, in the power transformer 44 the foaming material of the barrier 58 layer is an inorganic melamine compound (e.g., melamine phosphate, melamine silicate), inorganic guanidine compound (e.g., guanidine phosphate), or encapsulated melamine.

Therefore, according to the present invention there are provided suitable measures to provide the power transformer in a way that basically does not contribute to the fire development, basically, has a neutral behavior. This is achieved by at least partially covering the burnable components like the low voltage electric coil, the high voltage electric coil, and the barrier layer with the fire inhibiting coating. This measure is supplemented by the blocking of the chimney effect in the cooling channels when the fire inhibiting material is provided also at the side surfaces of the electric coils.

Overall, the present invention allows to avoid harm to persons caused by toxic gases, heat and gas development. The present invention also prevents damages to the power transformer or the building wherein the power transformer is situated.

## Claims

1. Electric coil, comprising:
a plurality of turns coiled around an axis to form a hollow coil body (14) having an outer circumferential surface, an inner circumferential surface, a first side surface, and a second side surface; wherein
each turn is an arrangement of at least one winding layer (16) and at least one insulation layer (18);
***characterized in that***
the hollow coil body (14) is at least partially covered by a fire inhibiting material selected from a group consisting of an intumescent material, a flame protection material, a foaming material, and a binder material.

2. Electric coil according to claim 1, **characterized in that** the fire inhibiting material is deposited on a fire protection mat (12) and that the fire protection mat (12) is attached at least to a part of an outer surface of the coil hollow body (14).

3. Electric coil according to claim 2, **characterized in that** the fire protection mat (12) is a fabric carrier or fleece and that the fire inhibiting material is fixed to the fabric carrier or fleece by the binding material.

4. Electric coil according to claim 2 or 3, **characterized in that** fire protection mat (12) is made from plastic, paper, foil or glass and has a weight of 50 to 300 g/m².

5. Electric coil according to one of the claims 2 to 4, **characterized in that** fire protection mat (12) is provided in the form of a roll or plate, has a width of 10 mm to 2000 mm, a thickness of 0.5 mm to 5 mm, a length of 200 mm to 500000 mm in the form of the roll and a length of 500 mm to 3000 mm in the form of a plate, and a weight of 150 g/m² to 1000 g/m².

6. Electric coil according to one of the claims 1 to 5, **characterized in that** the intumescent material is ammonium phosphate, organic triphosphate or 9, 10-dihydro-9-oxa-10-phosphaphenanthren-10-oxide (DOPO).

7. Electric coil according to one of the claims 1 to 6, **characterized in that** the flame protection material is aluminum hydroxide, magnesium hydroxide, inorganic phosphorous, graphite or an organic phosphorous compound.

8. Electric coil according to one of the claims 1 to 7, **characterized in that** the foaming material is an inorganic melamine compound, inorganic guanidine compound, or encapsulated melamine.

9. Electric coil according to one of the claims 1 to 8, **characterized in that** the binder material is a copolymer based on acrylate, styrene, or vinyl acetate.

10. Electric coil according to one of the claims 1 to 8, **characterized in that** the binder material is a polyurethane, vinyl resin, or an epoxy resin.

11. Electric coil according to one of the claims 1 to 10, **characterized in that** the weight of the fire inhibiting material is from 100 g/m² to 700 g/m².

12. Electric coil according to one of the claims 2 to 11, **characterized in that** the fire protection mat (12) is provided at the outer circumferential surface and/or at inner circumferential surface of the coil hollow body (14) prior to a dry-casting of the electric coil.

13. Electric coil according to one of the claims 2 to 11, **characterized in that** the fire protection mat (12) is attached to the outer circumferential surface and/or at inner circumferential surface of the coil hollow body (14) by glue, by shrinkage foil, by welding, or by mechanical fixing means.

14. Electric coil according to one of the claims 2 to 13, **characterized in that** the fire protection mat (12) is provided within the coil hollow body (14) by providing at least one turn as an arrangement of at least one winding layer (16), at least one insulation layer (18), and at least one fire protection mat (12).

15. Electric coil according to one of the claims 2 to 14, **characterized in that** the fire protection mat (12) is provided on the first side surface and/or the second side surface of the coil hollow body (14).

16. Electric coil according to claims 15, **characterized in that** the fire protection mat (12) is provided on the first side surface and/or the second side surface in a thickness of 1 mm to 50 mm.

17. Dry cast power transformer, comprising:
a transformer core (46) with at least one transformer leg;
a low voltage coil (48) being provided around the transformer leg in a spaced manner and being connectable by low voltage terminals (50);
a high voltage coil (52) being provided around the low voltage coil in a spaced manner and being connectable by high voltage terminals;
***characterized in that***
the low voltage coil (48) and/or the high voltage coil (52) is an electric coil according to one of the claims 1 to 16.

18. Dry cast power transformer according to claim 17, comprising a barrier cylinder (58) provided between the low voltage coil (48) and the high voltage coil (52), the barrier cylinder (58) being at least partially covered by a fire inhibiting material selected from a group consisting of an intumescent material, a flame protection material, a foaming material, and a binder material.

19. Dry cast power transformer according to claim 18, **characterized in that** the intumescent material of the barrier layer (58) is ammonium phosphate, organic triphosphate or 9, 10-dihydro-9-oxa-10-phosphaphenanthren-10-oxide (DOPO).

20. Dry cast power transformer according to claim 18, **characterized in that** the flame protection material of the barrier layer (58) is aluminum hydroxide, magnesium hydroxide, inorganic phosphorous, graphite or organic phosphorous compounds.

21. Dry cast power transformer according to claim 18, **characterized in that** the foaming material of the barrier layer (58) is an inorganic melamine compound, inorganic guanidine compound, or encapsulated melamine.

22. Dry cast power transformer according to claim 18, **characterized in that** the binding material of the barrier layer (58) is a copolymer based on acrylate, styrene, or vinyl, an acetate, a polyurethane, a vinyl resin, or an epoxy resin.
